# EUROPEAN PATENT SPECIFICATION

(11) **EP 4 221 929 B1**
(45) Date of publication and mention of the grant of the patent: **17.09.2025**
(21) Application number: 21811735.6
(22) Date of filing: 30.09.2021
(51) Int. Cl.: B23K 26/082, B01J 13/00, B01J 19/12, B23K 26/122, B23K 26/362, B23K 26/40, B23K 26/60, B23K 103/08, B23K 103/10, B23K 103/12, B23K 103/00

(54) **METHOD OF PRODUCING A NANOFLUID USING LASER ABLATION, AND LASER ABLATION SYSTEM FOR MANUFACTURING NANOFLUIDS**
VERFAHREN ZUR HERSTELLUNG EINES NANOFLUIDS MITTELS LASERABLATION, UND LASERABLATIONSSYSTEM ZUR HERSTELLUNG VON NANOFLUIDEN
PROCÉDÉ DE PRODUCTION D'UN NANOFLUIDE PAR ABLATION LASER, ET SYSTÈME D'ABLATION LASER POUR LA FABRICATION DE NANOFLUIDES

(30) Priority: 01.10.2020 ZA 202006082
(43) Date of publication of application: 09.08.2023
(73) Proprietor: University of South Africa, 0002 Pretoria (ZA)
(72) Inventor: MAAZA, Malek, Cape Town (ZA); KHAMLICH, Saleh, 7140 Cape Town (ZA)
(74) Representative: Hanna, John Philip
(86) International application number: PCT/ZA2021/050056
(87) International publication number: WO 2022/073044

(56) References cited:
- IT-A1- ME20 110 025
- JP-A- 2016 530 395
- US-A1- 2019 202 004

## Description

This invention relates to a novel process for a One-step Mass-Production of various nanofluids in a modified version of laser ablation in open atmosphere, and in particular to a method of producing a nanofluid, and to a laser ablation system for manufacturing nanofluids, see claims 1 and 13.

### BACKGROUND TO THE INVENTION

It is known in the emerging field of nanofluids that such hybrid fluids, are gaining a global interest both from scientific & industrial point of view.

One of the technological application of nanoparticles that hold sound promise is their use as suspensions in various host fluids to enhance its thermal properties in general and specifically its heat transfer characteristics of such fluid. This would confront the challenging cooling problems in various thermal systems. The term "nanofluid" refers to a solid-liquid mixture or suspension produced by dispersing nano scaled metallic or nonmetallic solid particles in liquids.

The size of nanoparticles (usually less than 100 nm) in liquid mixtures gives them the ability to interact with liquids at the molecular level and so, conduct heat better than standard heat transfer fluids. Nanofluids can display enhanced heat transfer because of the combination of convection and conduction and additional energy transfer by particle dynamics and collision in addition to the elevated intrinsic heat conductivity of the nanoparticles themselves.

Suspensions of millimeter and micron-sized solid particles in liquids have been investigated for cooling and other applications but because of the relatively large sizes of the particles, they tend to cause abrasive action, which erodes system components. Also, they obstruct small flow channels and have the propensity to settle under gravity resulting in undesired pressure drops. Such a sedimentation phenomenon has to be minimized at a maximum.

In contrast, nanoparticles in fluids have low momentum, which greatly reduces abrasive wear and nanofluids can be described as colloids since a colloid is a substance made up of a system of particles that is insoluble yet remains in solution and dispersed in another fluid medium. The nanofluids, pioneered by Stephen S. Choi from the US Dept. of Energy, have been prepared by either single or multiple steps methodologies, namely:
1-Direct evaporation technique
2-Submerged arc nanoparticle synthesis technique
3-Laser ablation
4-Microwave irradiation
5-Polyol process
6-Phase-transfer method

The platinum group metals (PGMs) are six transitional metal elements that are chemically, physically, and anatomically similar. The PGMs are the densest known metal elements.

The six PGMs are:
1-Iridium (Ir)
2-Osmium (Os)
3-Palladium (Pd)
4-Platinum (Pt)
5-Rhodium (Rh)
6-Ruthenium (Ru).

For purposes of this definition, we include Gold and Silver to define a PGM.

In the development of nanofluid production techniques, notable advancements are evident in existing literature. Document D1, IT ME20 1 10 025 A1 (A M RES S R L, 14 June 2013 ; describing the preamble of claims 1 and 13), shows a method for producing inorganic nanoparticles through laser ablation in liquid flow, particularly emphasizing the application of laser pulses to generate nano-particle colloids. Document D2, US 2019/202004 A1 (D. T. A. MATTHEWS ET AL, 4 July 2019), details a method for texturing a moving steel strip where the surface is modified using ablation by a single laser beam or multiple laser beams, with liquid application over the working area. This document focuses more on surface structuring using laser ablation rather than nanofluid production, showcasing a distinct aspect of laser ablation applications. Document D3, JP 2016 530395 A (AISIN SEIKI KK ET AL, 29 September 2016), describes a process for making a colloidal suspension of precious metal nanoparticles, with a specific focus on controlling the electrical conductivity of the dispersion medium during laser ablation to achieve desired nanoparticle sizes. These documents collectively represent the technological landscape in the field of nanofluid production and laser ablation techniques. Our invention builds upon this landscape, proposing an improved and distinct method for the one-step mass production of various nanofluids using laser ablation in an open atmosphere, thereby advancing the state of the art.

It is accordingly an object of the present invention to provide an invention which relates to a novel laser ablation process employing a one-step mass production of nano particles from metallic, oxide, carbide and nitride targets which can be made nanofluids, in various liquids such as oils, H₂O, Ethylene Glycol (EG), and which nanofluids have enhanced thermal conductivity.

### SUMMARY OF THE INVENTION

According to a first aspect of the invention there is provided a method of producing a nanofluid as defined in claim 1, the method including laser ablating a target on a surface of which a liquid is flowing.

In an embodiment, the method may include moving the target and a laser beam relative to each other, preferably moving the target relative to the laser beam such that the laser beam scans across the surface of the target in the X and/or Z direction when the laser beam is oriented in the Y direction and the target faces the laser beam.

In an embodiment, the liquid may be continuously flowing on the surface of the target that is being laser ablated, and the liquid may be arranged to flow on the target at a predefined speed so as to maintain a predefined thickness of the liquid flowing on the target.

According to the first aspect of the present invention, the liquid to be discharged on the surface of the target (14) is heated to a predefined temperature.

In an embodiment, the liquid may be in the form of any one or more of the group including water, Castro oil, engine oil, Rubbia oil or the like.

Further according to the first aspect of the present invention, the target is in the form of any one or more of the group including a metallic target, an oxide target, a nitride target, a carbide target or the like. More preferably, the metallic target may be in the form of non-oxidized but pristine metals, based on platinum group metals (PGMs). Yet further, the metallic target may be in the form of Cu and/or Al. Still further, the oxide target may be in the form of oxidized metals which may be selected from the group including CuO Al₂O₃, TiO₂, MgO or the like. Further still the nitride target may be in the form of TiN. Furthermore, the carbide target may be in the form of TiC and/or WC.

In an embodiment, the method may include collecting the liquid carrying laser ablated particles, wherein the laser ablated particles are in suspension in the collected liquid, wherein the liquid and suspended laser ablated particles define the nanofluid.

In an embodiment, the method may include laser ablating the target in an open atmosphere.

According to a second aspect of the invention, there is provided a laser ablation system for manufacturing nanofluids as defined in claim 13, the system including:
a laser beam source for producing a laser beam;
a target that is arranged to be in the path of the laser beam; and
a liquid source for discharging liquid on a surface of the target that is arranged to be laser ablated.

In an embodiment, the system may comprise a series of outlets in fluid communication with the target, for discharging the liquid from the liquid source onto the surface of the target that is arranged to be laser ablated.

In an embodiment, the system may comprise means for adjusting a rate at which the liquid is discharged on the surface of the target.

According to the second aspect of the present invention, the system comprises a heating means for heating the liquid that is arranged to be discharged on the surface of the target.

In an embodiment, the system may comprise a collector that is arranged to collect the liquid flowing across the target, the liquid being arranged to carry laser ablated particles from the target.

In an embodiment, the system may comprise a computer system that is coupled to a displacement means, the computer system and displacement means being arranged to displace the target and laser relative to each other, preferably displace the target relative to the path of the laser beam so as to enable the laser beam to scan across the surface of the target and accordingly systematically scan the surface of the target as the laser beam is ablating the target.

### BRIEF DESCRIPTION OF THE FIGURES

The objects and features of the present invention will become fully apparent from following the description taken in conjunction with the accompanying drawings. Undertaking that these drawings depict only typical embodiments of the invention and are therefore, not to be considered limiting its scope, the invention will be described and explained with additional specific detail through the use of the accompanying drawings in which:
In the drawings:
**Figure 1** shows a laser ablation system for producing nanofluids.
**Figure 2** illustrates a typical transmission electron microscopy of nano-scaled Cu nanoparticles made within the described process whereby the Z-X moving target of Cu was covered with a flowing laminar film of standard Engine oil;
**Figure 3** illustrates a typical high-resolution transmission electron microscopy of nano-scaled Cu nanoparticles made within the described process;
**Figure 4** shows the thermal conductivity of the Cu Nanosuspensions in standard Engine oil and that of pure Engine oil measured by standard Pt wire technique; and
**Figure 5** shows the thermal conductivity of the Cu & Al Nanosuspensions in standard Transmission oil and that of pure Transmission oil measured by standard Pt wire technique;
**Figure 6** shows the thermal conductivity of the Cu & Al Nanosuspensions in standard Motui oil and that of pure Motui oil measured by standard Pt wire; and
**Figure 7** shows the thermal conductivity of the Cu & Al Nanosuspensions in standard Castro oil and that of pure Castro oil measured by standard Pt wire.

### DETAILED DESCRIPTION OF THE INVENTION

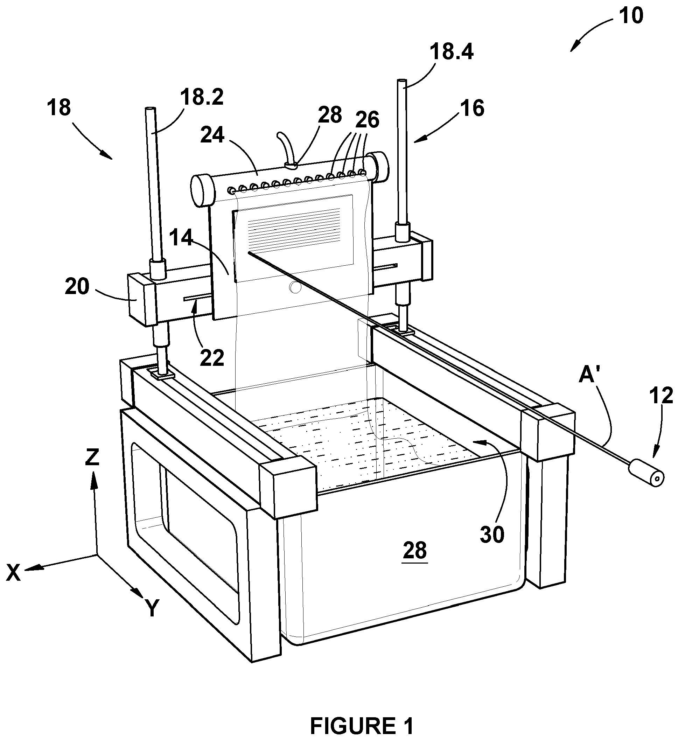

As can be seen in Figure 1 of the drawings, there is provided a laser ablation system designated generally by reference numeral 10. The system 10 comprises a laser beam source 12 that is shown arranged in the Y direction and facing a substantially rectangular or cuboid target 14. The target 14 is fitted to a displacement means 16, comprising a pair of upright arms 18; an elongate support 20 that is fitted between the pair of upright arms 18; the support 20 defining a longitudinal recess 22 that accommodates a complementary member (not shown) on the target 14, which complementary member (not shown) is arranged to connect the target 14 to the support 20, and is further arranged to slide within the recess to allow the target to move relative to the support in the X-direction relative to the beam path of the laser beam emitted by the laser source 12 in the Y-direction; and an actuator (now shown) such as motors (not shown) which are arranged to displace/translate the support 20 along the arms 18.2, 18.4 in the Z direction relative to the beam path A' of the laser beam emitted by the laser source 12 in the Y-direction, and further arranged to displace the target 14 relative to the support 20 in the X-direction through sliding movement of the complementary member (not shown) in the recess 22.

The system 10 comprises a computer system (not shown) that comprises a processor (not shown) and a memory device (not shown) containing instructions which are arranged to cause the displacement means 16 to displace the target 14 in the X and Z directions in a predefined sequence so as to enable the laser beam to scan across the surface of the target 14 facing the laser beam and enable the laser beam to ablate the surface of the target 14 in contact with the laser beam.

The system 10 further comprises a conduit 24 defining a series of longitudinally spaced outlets 26 which are in flow communication with the target 14, and which are arranged to discharge a liquid that is received through the inlet 28 on the conduit 24, onto the surface of the target 14 that is facing in the direction of the beam path A'. The system 10 further comprises a liquid source (not shown) which is arranged to provide the liquid into the inlet 28, which liquid is arranged to be discharged onto the surface of the target 14 via the outlets 26. The liquid flows on the surface of the target in a controlled laminar flow preferably forming a moving thin coating while the ablation is taking place at the interface of the liquid and target.

The memory device (not shown) may be further arranged to cause the processor (not shown) to adjust the rate of flow of the liquid discharged onto the surface of the target 14 via the outlets 26, so as to maintain a laminar flow of the liquid across the surface of the target 14 and also to maintain a minimal thickness of the interface defined between the liquid and surface of the target 14. Accordingly, the instructions in the memory device may be arranged to correspond to a liquid type and target type that is used in the laser ablation system 10. For example, there may be predefined instructions for a target that is a carbide and a corresponding liquid that is used on carbide targets so as to ensure that a predefined flow of liquid is maintained across the surface of the target that is to be ablated.

According to the present invention, the system 10 further comprises a heating means (not shown) which is arranged to heat the liquid to a predefined temperature to adjust the viscosity of the liquid to a predefined viscosity that is appropriate for maintaining a predefined thickness or coating thickness of the liquid.

Furthermore, the system 10 comprise a collector 28 that is disposed below the target 14 and is in fluid communication with the target 14 to collect the liquid dripping or flowing from the target 14, the liquid carrying particles of the target 14 that have been laser ablated by the laser beam.

The liquid collected in the collector 28 defines the nanofluid in accordance with the invention, with the ablated particles being in suspension in the liquid, and preferably being uniformly dispersed in the liquid. The formed nanoparticles are not agglomerated & are suspended in the nanofluid for a long period of time minimizing the gravitational settlement phenomena.

According to the present invention, the target is a metallic target, an oxide target, a nitride target or a carbide target. The nature of the laser ablating source is determined by the absorption coefficient of the target material. The liquid is heated according to the present invention to modify its viscosity allowing a laminar flow over the target in order to avoid any substantial defocusing of the laser beam reaching the target.

In use, the laminar liquid flow and the thin thickness of the fluid on the X-Z moving target ensures that the laser beam is not geometrically affected at the liquid-target interface. While the target is ablated, the formed nanoparticles (i.e. ablated particles from the target) are dragged/displaced by the moving liquid film creating the targeted nanofluid which is collected at the bottom of the target in the collector 28. The target 14 is arranged to be moved in the X-Z direction to ensure ablation of fresh surface at any laser spot-target interaction. As highlighted in Figure 1, The host fluid (i.e. the liquid), typically heated slightly according to the present invention, to reduce its viscosity during the ablation process, is supplied to the target 14 at a predefined speed ensuring a regular continuous thin layer of host fluid coating while flowing continuously on the target. The wavelength of the laser is defined by the maximum of absorption of the target material. The fluence & rate repetition of the laser as well as the speed of X-Z of the target 14 determine the concentration of the then formed nanofluid. In the case of H2O based nanofluids, direct oxidation of the metallic formed nanoparticles can take place as in the standard LLSI/PLAL.

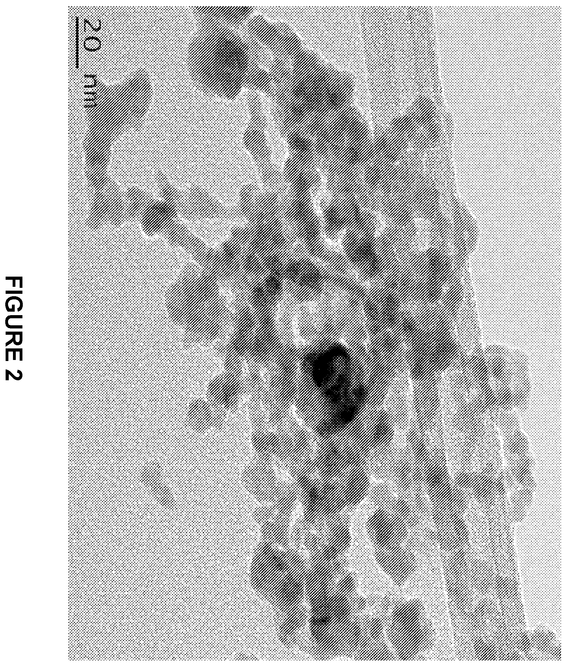

**Figure 2** illustrates a typical transmission electron microscopy of nano-scaled Cu nanoparticles made within the described process whereby the Z-X moving target of Cu was covered with a flowing laminar film of standard Engine oil.

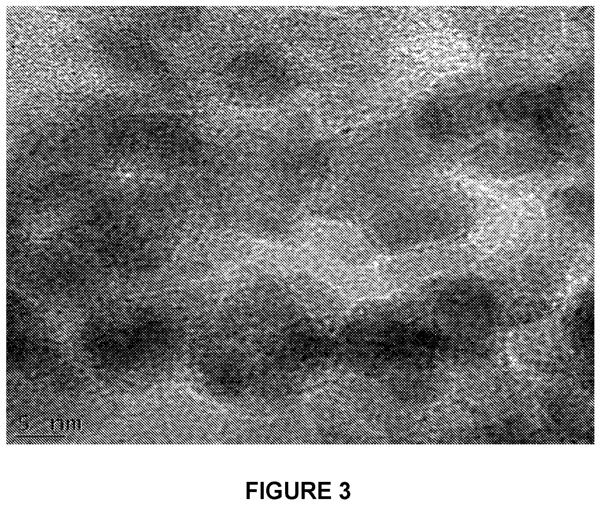

**Figure 3** illustrates a typical high resolution transmission electron microscopy of nano-scaled Cu nanoparticles made within the described process whereby the Z-X moving target of Cu was covered with a flowing laminar film of standard Engine oil. While mainly crystalline in structure, the Cu Nanoparticles exhibit various crystallographic orientations with a shell core morphology, a crystalline core & an amorphous shell coating.

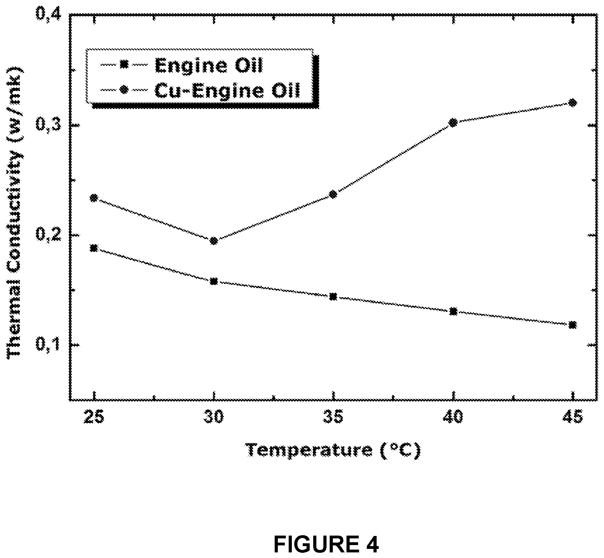

**Figure 4** shows the thermal conductivity of the Cu Nanosuspensions in standard Engine oil and that of pure Engine oil measured by standard Pt wire technique. While the thermal conductivity of Engine oil decreases with Temperature, the thermal conductivity of Cu-Engine oil nanofluid increases. The thermal conductivity at 45 Celsius is close to 200%.

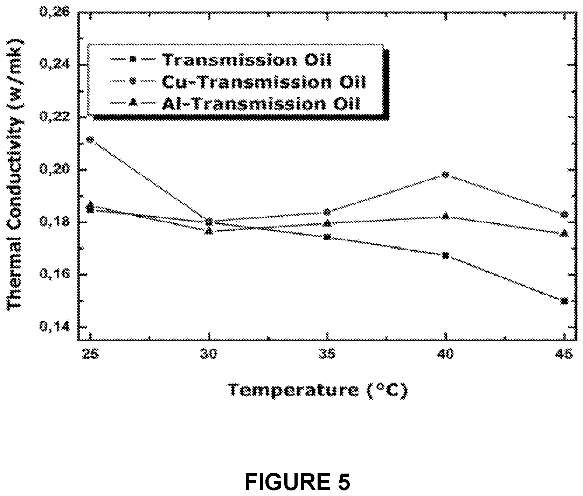

**Figure 5** shows the thermal conductivity of the Cu & Al Nanosuspensions in standard Transmission oil and that of pure Transmission oil measured by standard Pt wire technique. While the thermal conductivity of Transmission oil decreases with Temperature, the thermal conductivity of Cu-Transmission oil and Al Transmission oil nanofluid increases. The thermal conductivity at 45 Celsius is close to 22% for the Cu- Transmission oil while about 17% for Al- Transmission oil nanofluid.

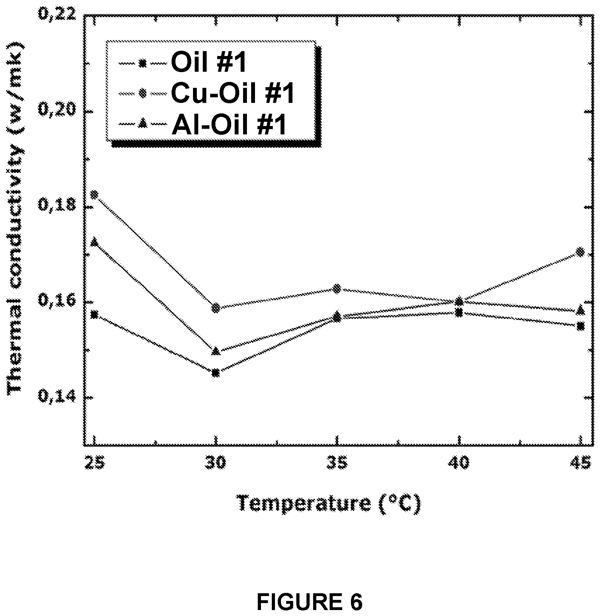

**Figure 6** shows the thermal conductivity of the Cu & Al Nanosuspensions in standard Motui oil and that of pure Motui oil measured by standard Pt wire technique. While the thermal conductivity of Motui oil decreases with Temperature, the thermal conductivity of Cu- Motui oil and Al-Motui oil nanofluid increases.

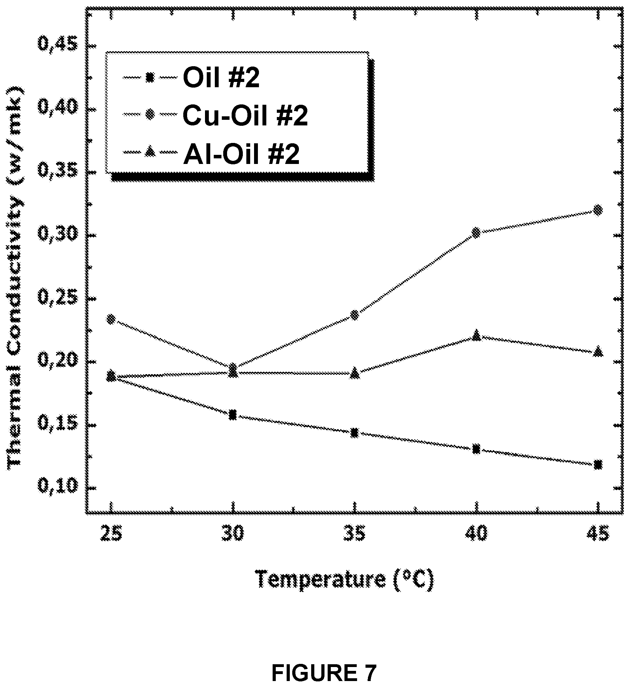

**Figure 7** shows Thermal conductivity of the Cu & Al Nanosuspensions in standard Castro oil and that of pure Castrol oil measured by standard Pt wire technique. While the thermal conductivity of Castrol oil decreases with Temperature, the thermal conductivity of Cu-Castrol oil and Al Engine oil nanofluid increases. The thermal conductivity at 45 Celsius is close to 200% for the Cu- Castrol oil while about 193% for Al- Castrol oil nanofluid.

As depicted in Figure 1, the laser ablation system has the following advantages:
(i) it is a one step process of forming nanofluids;
(ii) results in mass production & hence industrial production;
(iii) potential of fabrication of nanofluids from various target materials such as metals, oxides, nitrides, carbides;
(iv) no vacuum required to produce the nanofluids;
(v) the Nanoparticles are not agglomerated & are suspended in the nanofluid for a long period of time minimizing the gravitational settlement phenomena;
(vi) the system can be integrated effortlessly to various laser sources operating at various temporal regimes & various spectral ranges to optimize the rate of ablation by tuning the laser-matter optical absorption.

## Claims

1. A method of producing a nanofluid which includes laser ablating a target (14) on a surface of which a liquid is flowing, wherein the target (14) is in the form of any one or more of the group including a metallic target, an oxide target, a nitride target, or a carbide target,
**characterised in that**:
the liquid to be discharged on the surface of the target (14) is heated to a predefined temperature.

2. The method as claimed in claim 1 wherein said method includes the step of moving the target (14) and a laser beam relative to each other.

3. The method as claimed in claim 2 wherein said method includes the step of moving the target (14) relative to the laser beam such that the laser beam scans across the surface of the target (14) in the X or Z direction when the laser beam is oriented in the Y direction and the target (14) faces the laser beam.

4. The method as claimed in any one of the preceding claims wherein the liquid is continuously flowing on the surface of the target (14) that is being laser ablated, and the liquid is arranged to flow on the target (14) at a predefined speed so as to maintain a predefined thickness of the liquid flowing on the target (14).

5. The method as claimed in any one of the preceding claims wherein the liquid is in the form of any one or more of the group including water, Castor oil, engine oil, or Rubbia oil.

6. The method as claimed in any one of the preceding claims wherein the metallic target is in the form of non-oxidized but pristine metals, based on platinum group metals (PGMs).

7. The method as claimed in claim 6 wherein the metallic target is in the form of Cu or Al.

8. The method as claimed in any one of the preceding claims wherein the oxide target is in the form of oxidized metals.

9. The method as claimed in claim 8 wherein the oxidized metals are selected from the group including CuO, Al2O3, TiO2, or MgO.

10. The method as claimed in any one of the preceding claims wherein the nitride target is in the form of TiN.

11. The method as claimed in any one of the preceding claims wherein the carbide target is in the form of TiC or WC.

12. The method as claimed in any one of the preceding claims wherein said method includes the step of collecting the liquid carrying laser ablated particles, wherein the laser ablated particles are in suspension in the collected liquid, wherein the liquid and suspended laser ablated particles define the nanofluid.

13. A laser ablation system (10) for manufacturing nanofluids which includes:
a laser beam source (12) for producing a laser beam;
a target (14) that is arranged to be in the path of the laser beam; and
a liquid source for discharging liquid on a surface of the target (14) that is arranged to be laser ablated,
**characterised in that**:
the laser ablation system (10) comprises a heating means for heating the liquid that is arranged to be discharged on the surface of the target (14).

## Patentansprüche

1. Verfahren zur Herstellung eines Nanofluids, wobei es Laserabtragen eines Zielelements (14) umfasst, wobei auf einer Fläche des letzteren eine Flüssigkeit fließt, wobei das Zielelement (14) in Form eines beliebigen aus der Gruppe vorliegt, welche ein metallisches Zielelement, ein Oxidzielelement, ein Nitridzielelement oder ein Carbidzielelement beinhaltet,
**dadurch gekennzeichnet, dass**
die Flüssigkeit, welche dazu bestimmt ist, auf die Fläche des Zielelements (14) abgelassen zu werden, auf eine vorbestimmte Temperatur erwärmt wird.

2. Verfahren, wie es in Anspruch 1 beansprucht ist, wobei das Verfahren den Schritt des Bewegens des Zielelements (14) eines Laserstrahls relativ zueinander umfasst.

3. Verfahren, wie es in Anspruch 2 beansprucht ist, wobei das Verfahren den Schritt des Bewegens des Zielelements (14) relativ zu dem Laserstrahl umfasst, derart, dass der Laserstrahl eine Abtastung über die Oberfläche des Zielelements (14) in der X- oder Z-Richtung ausführt, wenn der Laserstrahl gemäß der Y-Richtung ausgerichtet ist und das Zielelement (14) dem Laserstrahl gegenüberliegt.

4. Verfahren, wie es in einem beliebigen der vorhergehenden Ansprüche beansprucht ist, wobei die Flüssigkeit kontinuierlich auf der Fläche des Zielelements (14) fließt, welche eine Laserabtragung erfährt, und derart vorgesehen ist, dass sie mit einer vorbestimmten Geschwindigkeit auf dem Zielelement (14) fließt, sodass eine vorbestimmte Dicke der auf dem Zielelement (14) fließenden Flüssigkeit aufrecht erhalten wird.

5. Verfahren, wie es in einem beliebigen der vorhergehenden Ansprüche beansprucht ist, wobei die Flüssigkeit in Form eines oder mehrerer beliebiger aus der Gruppe vorliegt, die Wasser, Rizinusöl, Motoröl oder Rubia-Öl beinhaltet.

6. Verfahren, wie es in einem beliebigen der vorhergehenden Ansprüche beansprucht ist, wobei das metallische Zielelement in Form nicht-oxidierter, sondern makelloser Metalle vorliegt, ausgehend von Platingruppenmetallen (PGM).

7. Verfahren, wie es in Anspruch 6 beansprucht ist, wobei das metallische Zielelement in Form von Cu oder Al vorliegt.

8. Verfahren, wie es in einem beliebigen der vorhergehenden Ansprüche beansprucht ist, wobei das Oxidzielelement in Form oxidierter Metalle vorliegt.

9. Verfahren, wie es in Anspruch 8 beansprucht ist, wobei die oxidierten Metalle aus der Gruppe ausgewählt sind, die CuO, Al2O3, TiO2 oder MgO umfasst.

10. Verfahren, wie es in einem beliebigen der vorhergehenden Ansprüche beansprucht ist, wobei das Nitridzielelement in Form von TiN vorliegt.

11. Verfahren, wie es in einem beliebigen der vorhergehenden Ansprüche beansprucht ist, wobei das Carbidzielelement in Form von TiC oder WC vorliegt.

12. Verfahren, wie es in einem beliebigen der vorhergehenden Ansprüche beansprucht ist, wobei das Verfahren den Schritt des Auffangens der Flüssigkeit umfasst, welche mittels Laser abgetragene Partikel umfasst, wobei die mittels Laser abgetragenen Partikel sich in der aufgefangenen Flüssigkeit in Suspension befinden, wobei die Flüssigkeit und die in Suspension befindlichen mittels Laser abgetragenen Partikel dem Nanofluid entsprechen.

13. Laserabtragungssystem (10) zur Herstellung von Nanofluids, wobei es Folgendes beinhaltet:
eine Laserstrahlquelle (12) zur Erzeugung eines Laserstrahls;
ein Zielelement (14), das dazu bestimmt ist, im Pfad des Laserstrahls angeordnet zu werden; und
eine Flüssigkeitsquelle zum Abgeben von Flüssigkeit auf eine Fläche des Zielelements (14), die dafür vorgesehen ist, mittels Laser abgetragen zu werden,
**dadurch gekennzeichnet, dass**
das Laserabtragungssystem (10) ein Heizmittel zum Erwärmen der Flüssigkeit umfasst, welche dafür vorgesehen ist, auf die Fläche des Zielelements (14) abgegeben zu werden.

## Revendications

1. Procédé de production d'un nanofluide comprenant l'ablation laser d'une cible (14) à la surface depuis laquelle un liquide s'écoule, la cible (14) étant sous une ou plusieurs formes parmi une cible métallique, une cible d'oxyde, une cible de nitrure ou une cible de carbure,
**caractérisé en ce que** :
le liquide à projeter sur la surface de la cible (14) est chauffé à une température prédéfinie.

2. Procédé selon la revendication 1, ledit procédé comprenant l'étape de déplacement de la cible (14) et d'un faisceau laser l'un par rapport à l'autre.

3. Procédé selon la revendication 2, ledit procédé comprenant l'étape de déplacement de la cible (14) par rapport au faisceau laser de telle sorte que le faisceau laser balaie la surface de la cible (14) dans la direction X ou Z lorsque le faisceau laser est orienté dans la direction Y et que la cible (14) fait face au faisceau laser.

4. Procédé selon l'une quelconque des revendications précédentes, dans lequel le liquide s'écoule en continu sur la surface de la cible (14) qui est soumise à l'ablation laser, et le liquide est agencé pour s'écouler sur la cible (14) à une vitesse prédéfinie de façon à maintenir une épaisseur prédéfinie du liquide s'écoulant sur la cible (14).

5. Procédé selon l'une quelconque des revendications précédentes, dans lequel le liquide est sous la forme d'une ou plusieurs substances du groupe comprenant l'eau, l'huile de ricin, l'huile moteur ou l'huile Rubia.

6. Procédé selon l'une quelconque des revendications précédentes, dans lequel la cible métallique est sous la forme de métaux non oxydés et non altérés, à base de métaux du groupe du platine (MGP).

7. Procédé selon la revendication 6, dans lequel la cible métallique est sous la forme de Cu ou de Al.

8. Procédé selon l'une quelconque des revendications précédentes, dans lequel la cible d'oxyde est sous la forme de métaux oxydés.

9. Procédé selon la revendication 8, dans lequel les métaux oxydés sont choisis dans le groupe comprenant CuO, Al2O3, TiO2 ou MgO.

10. Procédé selon l'une quelconque des revendications précédentes, dans lequel la cible de nitrure est sous la forme de TiN.

11. Procédé selon l'une quelconque des revendications précédentes, dans lequel la cible de carbure est sous la forme de TiC ou WC.

12. Procédé selon l'une quelconque des revendications précédentes, ledit procédé comprenant l'étape de collecte du liquide contenant les particules soumises à ablation laser, les particules soumises à ablation laser étant en suspension dans le liquide collecté, le liquide et les particules soumises à ablation laser en suspension définissant le nanofluide.

13. Système d'ablation laser (10) pour la fabrication de nanofluides, qui comprend :
une source de faisceau laser (12) pour produire un faisceau laser ;
une cible (14) qui est disposée de façon à être sur le trajet du faisceau laser ; et
une source de liquide pour projeter le liquide sur une surface de la cible (14) à soumettre à ablation laser,
**caractérisé en ce que** :
le système d'ablation laser (10) comprend un moyen de chauffage pour chauffer le liquide qui doit être projeté sur la surface de la cible (14).
